# EUROPEAN PATENT APPLICATION

(11) **EP 3 648 409 A1**
(43) Date of publication of application: **06.05.2020**
(21) Application number: 18204101.2
(22) Date of filing: 02.11.2018
(51) Int. Cl.: H04L 12/26, H04L 12/24

(54) **APPLICATION END-POINT AWARE MONITORING**

(71) Applicant: Siemens Aktiengesellschaft, 80333 München (DE)
(72) Inventor: Kulkarni, Vivek, 82008 Unterhaching (DE); Sakic, Ermin, 81379 München (DE)

(57) **Abstract**

The present invention relates to a method of and system for application end-point aware monitoring, in particular of critical communication service intents in Software Defined Networks (SDN) such as Software Defined Industrial Networks. The method comprises in particular:
Generating a sender timestamp (TS_{S,i}) for each data packet (Pᵢ) at the sender upon sending of the respective data packet (Pᵢ). Generating a receiver timestamp (TS_{R,i}) for each data packet (Pᵢ) at the receiver upon receiving of the respective data packet (Pᵢ). Fetching for each received data packet (Pᵢ) via the packet identifier (IDᵢ) the respective sender timestamp (TS_{S,i}) from a sender database and the respective receiver timestamp (TS_{R,i}) from a receiver database. Calculating monitoring values based on the fetched sender timestamps (TS_{S,i}) and corresponding receiver timestamps (TS_{R,i}).

## Description

The present invention relates to a method of and system for application end-point aware monitoring, in particular of critical communication service intents in Software Defined Networks (SDN) such as Software Defined Industrial Networks.

Especially industrial applications, like motion control of robots or control of wind farms and smart grids, impose strict Quality of Service (QoS) requirements (e.g. latency in the range of ms [Milliseconds] for motion control or in the range of s [Seconds] for wind farms / smart grids). Thereby it is essential to verify the status of requested QoS or intent of the application in real-time and deliver it back to the respective application. If the provided QoS level is less than the requested QoS level, then the application can inform about this difference e.g. to an SDN controller, which in turn provides the missing resources to the application. This allows the applications to adaptively control the network (e.g. SDN).

Most of the recent research and implementations related to monitoring in SDN domain are directed towards general network performance. The network controller (e.g. SDN controller) potentially consumes their monitoring results to optimize the network performance with respect to the utilization and average experienced latency.

It is known an adaptive polling statistics monitoring approach. It is a separate framework developed on top of a SDN controller North Bound Interface (NBI), which enhances its usability to third-party applications, as they can remain oblivious to a monitoring mechanism. The fundamental functionality is driven by an adaptive monitoring algorithm that lies at the core of a scheduler component of this framework. It uses an adaptive statistics collection algorithm that delivers highly accurate information in real-time without incurring significant network overhead. According to this algorithm whenever the network controller receives an OpenFlow PacketIn message from a switch, it will add a new flow entry along with an initial statistics collection timeout (T milliseconds, also called "soft timeout") to an active flow table. If the flow expires within T milliseconds, the corresponding switch will automatically send a FlowRemoved message to the network controller. Otherwise, in the event of timeout (i.e. after T milliseconds), the network controller decides to send a FlowStatisticsRequest message to the corresponding switch to collect statistics about that flow. In case of timeout, if the difference between the old and new byte count against that flow does not exceed a first threshold, then the timeout for that flow is multiplied and extended by a small first constant. This multiplication will be repeated for a flow with low packet rate until a maximum timeout value is reached. On the contrary, if the difference in the previous and current data becomes larger than the first threshold or an alternative upper bound second threshold the scheduling timeout of that flow is divided by a second constant. For a flow with high packet rate, this division will be repeated until a minimum timeout value is reached. The reasoning behind this timeout adjustment is that it ensures an adaptable polling frequency for flows depending upon their contribution to link utilization, at any given moment. In that sense, the adaptive algorithm allows a flow that contributes more to the link utilization to have a higher polling frequency and awards a lower polling frequency to a flow that does not significantly contribute towards link utilization. To adapt the polling frequency, if the contribution of the flow changes, this algorithm re-adjust their scheduling timeout, based on their contribution to link utilization. Otherwise, this algorithm will not readjust the scheduling timeout. Thus its scheduling algorithm adapts to the traffic pattern in real-time.

In that way a global database is implemented, which stores the relevant monitoring result values. The global database can be accessed by any application through its Representational State Transfer (RESTful) interface. As per its adaptive monitoring algorithm, it maintains a lower polling frequency for flows that do not significantly contribute towards link utilization at any point. It means, for small flows which last less than the soft timeout, this approach will produce less accurate monitoring results. However, for elephant flows, it will provide more accurate monitoring results compared to small flows. The reasoning behind this inaccuracy for small flows is that the frequency of sampling will get smaller (up to the minimum timeout value) leading to insufficiently sampled monitoring data. Consequently, this approach is not ideal for small industrial flows.

Further it is known a proactive model to measure real-time path delay between two end OpenFlow switches for MPLS-TP network using an SDN model from the Operations, Administration, and Maintenance (OAM) point of view. This model of measuring path delay is based on continuously injecting probe packets from the network controller to an ingress switch which in turn forwards it to an egress switch through the user label switched path, and finally, the probe packet returns to the network controller. This model measures the path delay, where the network controller measures the Round trip time (RTT) to switches separately by polling them at a constant interval. The network controller sends Request Statistics message to them and then afterwards by checking Statistics event Even-tOFPPortStatsReply, it measures the RTT between itself and switches. Thus, it calculates the total delay it takes for a probe packet to go through all the switches in a user label switched path.

This state-of-the-art monitoring technique considers applications as black boxes and focuses on network performance (in terms of path delay) instead. It assumes that probe and datagram packets will take the same route, which is not always possible. For example, in case of load balancing or network congestion, it could be possible for probe and datagram packets to take separate paths. This model also assumes that any intermediate node will not impose any processing delay, which is not true for a realistic network. For example, switches impose processing delay; they also drop packets based on their output queue size. Thus assuming that both types of packets will share the same fate is not a feasible assumption from the networking point of view. The design of this model is only suitable for unicast transmission and UDP. It also causes extra traffic in the network for each pair of end-switches.

It is an object of the present invention to at least alleviate the above mentioned problems and to provide a real-time intent monitoring model.

These objectives are achieved by the method according to claim 1 and the method and systems according to the further independent claim. Further refinements of the present invention are subject of the dependent claims.

According to a first aspect of the present invention a method of application end-point aware monitoring comprises the steps:
a) Sending at least one data packet (Pᵢ) from a sender to a network for forwarding to a receiver.
b) Generating a sender timestamp (TS_{S,i}) for each data packet (Pᵢ) at the sender upon sending of the respective data packet (Pᵢ).
c) Sending the generated sender timestamps (TS_{S,i}) each together with a packet identifier (IDᵢ) of the respective data packet (Pᵢ) to a Sender-Monitor-Manager (SMM).
d) Storing the sender timestamps (TS_{S,i}) together with the respective packet identifiers (IDᵢ) in a sender database by the SMM.
e) Forwarding the at least one data packet (Pᵢ) to the receiver.
f) Receiving the forwarded at least one data packet (Pᵢ) from the network by the receiver.
g) Generating a receiver timestamp (TS_{R,i}) for each data packet (Pᵢ) at the receiver upon receiving of the respective data packet (Pᵢ).
h) Sending the generated receiver timestamps (TS_{R,i}) each together with the packet identifier (IDᵢ) of the respective data packet (Pᵢ) to a Receiver-Monitor-Manager (RMM) .
i) Storing the receiver timestamps (TS_{R,i}) together with the respective packet identifiers (IDᵢ) in a receiver database by the RMM.
j) Fetching for each received data packet (Pᵢ) via the packet identifier (IDᵢ) the respective sender timestamp (TS_{S,i}) from the sender database and the respective receiver timestamp (TS_{R,i}) from the receiver database.
k) Calculating monitoring values based on the fetched sender timestamps (TS_{S,i}) and corresponding receiver timestamps (TS_{R,i}).

According to a second aspect of the present invention a system for application end-point aware monitoring comprises a network, a sender, a first timestamp generator, a Sender-Monitor-Manager (SMM), a sender database, a receiver, a second timestamp generator, a Receiver-Monitor-Manager (RMM), a receiver database and a monitor. The network is configured for forwarding data packets (Pᵢ). The sender is communicatively connected with the network and configured for sending data packets (Pᵢ) to the network. The first timestamp generator is located at the sender and configured for generating a sender timestamp (TS_{S,i}) for each data packet (Pᵢ) upon sending of the respective data packet (Pᵢ). The first timestamp generator is further configured for sending the generated sender timestamps (TS_{S,i}) each together with a packet identifier (IDᵢ) of the respective data packet (Pᵢ) to the SMM. The SMM is configured for storing the sender timestamps (TS_{S,i}) together with the respective packet identifiers (IDᵢ) in the sender database. The receiver is communicatively connected to the network and configured for receiving data packets (Pᵢ) from the network. The second timestamp generator is located at the receiver and configured for generating a receiver timestamp (TS_{R,i}) for each data packet (Pᵢ) upon receiving of the respective data packet (Pᵢ). The second timestamp generator is further configured for sending the receiver timestamps (TS_{R,i}) each together with the packet identifier (IDᵢ) of the respective data packet (Pᵢ) to the RMM. The RMM is configured for storing the receiver timestamps (TS_{R,i}) together with the respective packet identifiers (IDᵢ) in the receiver database. The monitor is configured for fetching for each received data packet (Pᵢ) via the packet identifier (IDᵢ) the respective sender timestamp (TS_{S,i}) from the sender database and the respective receiver timestamp (TS_{R,i}) from the receiver database and for calculating monitoring values based on the fetched sender timestamps (TS_{S,i}) and corresponding receiver timestamps (TS_{R,i}) .

The first and second aspect of the present invention implement a real-time intent monitoring model at network controller level with active participation of end-host applications, that monitor the real-time status of individual requested intents or Communication Services and give the intent-monitoring results back to the applications, and similarly, allow for control loop optimization/rescheduling of intent configurations so to optimize/re-enable intent variables during runtime. This monitoring model is able to support pertenant or per-application granularity to be compatible with multi-tenancy.

Here the first timestamp generator is located at the sender and the second timestamp generator is located at the receiver. "At" in the context of the present invention means in the vicinity of the sender/receiver or directly in the sender/receiver as part of or comprised by it. Small deviations in runtime between a timestamp generator located in the vicinity of the sender/receiver compared to a timestamp generator in the sender/receiver can be disregarded.

The sender and receiver are connected via an interface (e.g. RESTful interface) over the network which may be controlled by a network controller.

When a data packet (Pᵢ) is sent from the sender to the network, then a sender timestamp (TS_{S,i}) for this sent data packet (Pᵢ) is generated. Likewise, when a data packet (Pᵢ) is received at the receiver from the network, then a receiver timestamp (TS_{R,i}) for this data packet (Pᵢ) is generated. The both types of timestamps (TS_{S,i}, TS_{R,i}) are used to monitor the QoS between the sender and the receiver.

Thereto, the sender timestamps (TS_{S,i}) and the receiver timestamps (TS_{R,i}) are stored in the respective sender database or receiver database together with the packet identifier (IDᵢ) of the respective data packet (Pᵢ). Based on the packet identifiers (IDᵢ) each pair of two corresponding timestamps (TS_{S,i}, TS_{R,i}) of one sent and received data packet (Pᵢ) can be retrieved from the sender database and the receiver database, respectively.

The two corresponding timestamps (TS_{S,i}, TS_{R,i}) for each data packet (Pᵢ) are used for monitoring. Thereto, respective monitoring values are calculated based on the two corresponding timestamps (TS_{S,i}, TS_{R,i}), which are fetched from the respective database. Fetching in the context of the present invention can be pushing or pulling. The respective timestamps can be pushed from the databases to the entity implementing the step k) of calculating the monitoring values by the sender and/or by the receiver. The respective timestamps may alternatively or additionally be pulled from the databases to the entity implementing the step k) of calculating the monitoring values by said entity. The monitoring values may be calculated using mathematical equations according to the standard IETF RFC 3550.

The monitor implementing the actual monitoring of the QoS by means of the steps j) of fetching and k) of calculating may be a separate entity or incorporated in the RMM, the network controller, the SMM, the sender or the receiver or a combination thereof. Preferably, the RMM, the SMM and the monitor are incorporated in the network controller.

The sender and receiver implement a unidirectional network communication. However, the present invention is not limited to unidirectional network communications. A first application may comprise a first sender and first receiver and a second application may comprise a second sender and a second receiver. The first sender may send packets to the second receiver and the second sender may send messages to the first receiver, where for both directions respective timestamps are generated at both senders and both receivers upon sending and receiving the packets.

With the present application end-point aware monitoring the QoS of an intent between a sender and a receiver in a network can be accurately and efficiently monitored with only minimal additional traffic and calculation resource allocation for the monitoring itself.

According to a refinement of the present invention the sender timestamps (TS_{S,i}) are generated by the sender. Additionally or alternatively the receiver timestamps (TS_{R,i}) are generated by the receiver.

According to a further refinement of the present invention the first timestamp generator is incorporated by the sender. Additionally or alternatively the second timestamp generator is incorporated by the receiver.

The generation of the respective timestamps (TS_{S,i}, TS_{R,i}) can be implemented by the sender and/or the receiver. Thereto, the respective timestamp generators can be incorporated by the sender and/or the receiver.

Implementing the generation of the respective timestamps (TS_{S,i}, TS_{R,i}) directly in the sender and receiver is a very efficient way of generating the timestamps (TS_{S,i}, TS_{R,i}) as no additional entities have to be placed into the network. Further, the actual time of sending and receiving a specific packet can be captured by the respective timestamps (TS_{S,i}, TS_{R,i}) thus providing the most accurate monitoring of the QoS.

According to a refinement of the present invention the sender timestamps (TS_{S,i}) are generated by a sender switch located next to the sender and/or the receiver timestamps (TS_{R,i}) are generated by a receiver switch located next to the receiver.

According to a further refinement of the present invention the system further comprises a sender switch and/or a receiver switch. The sender switch is located next to the sender, wherein the first timestamp generator is incorporated by the sender switch. The receiver switch is located next to the receiver, wherein the second timestamp generator is incorporated by the receiver switch.

The generation of the respective timestamps (TS_{S,i}, TS_{R,i}) can be implemented by the sender switch and/or the receiver switch, which are/is located in the vicinity of the sender or the receiver, respectively. Thereto, the respective timestamp generators can be incorporated by the sender switch and/or the receiver switch.

Implementing the generation of the respective timestamps (TS_{S,i}, TS_{R,i}) in the vicinity of the sender and receiver has the advantage that independent of the respective sender or receiver the timestamps (TS_{S,i}, TS_{R,i}) can be generated. Thus, the sender and/or receiver can be replaced by a different sender/receiver without having to adapt the said sender/receiver to be able to generate the respective timestamps (TS_{S,i}, TS_{R,i}). These refinements therefore provide a way of monitoring of the QoS with the option of very easy integration of different senders and/or receivers.

According to a refinement of the present invention the method further comprises the initial steps:
- Defining an intent for a network communication of the sender with the receiver via the network.
- Forwarding the intent to a network controller of the network.
- Serving the intent by the network controller.

According to a further refinement of the present invention the system further comprises an intent module and a network controller for the network. The intent module is configured for defining an intent for a network communication of the sender with the receiver via the network. The intent module is further configured for forwarding the intent to the network controller. The network controller is configured for serving the intent.

According to a preferred refinement of the present invention the intent module is comprised by the sender.

The intent can be defined and predetermined by an external entity or by the sender or by the receiver. Accordingly, the intent module can be incorporated by an external entity or by the sender or by the receiver. Preferably, the sender defines its own intent and accordingly the intent module is preferably incorporated by the sender. The intent can comprise certain QoS limits that have to be fulfilled by the serving network. After having received the desired intent, preferably by the sender, the network controller serves the desired intent by providing respective network capacities for the network communication between the sender and the receiver.

Especially defining the intent directly by the sender ensures that the intent and the actually needed QoS correspond each other and that the served intent suffices the needs of the network communication between sender and receiver regarding QoS.

According to a refinement of the present invention the steps j) and k) are executed by the RMM.

According to a further refinement the monitor is comprised by the RMM.

The RMM has access to the sender timestamps (TS_{S,i}) corresponding to the receiver timestamps (TS_{R,i}) via the respective packet identifier (IDᵢ). Thus, besides handling of the generated receiver timestamps (TS_{R,i}) the RMM can implement the monitoring of the QoS via the steps j) of fetching and k) of calculating. The RMM thereto comprises the monitor.

By using the RMM for monitoring the QoS a very efficient and simple structure is provided that does not need additional entities for monitoring.

According to a refinement of the present invention the method further comprises the step:
1) Storing the calculated monitoring values in the receiver database.

According to a further refinement of the present invention the monitor is further configured for storing the calculated monitoring values in the receiver database.

The calculated monitoring values are stored in the receiver database. This is especially efficient when the RMM implements the monitoring of the QoS by executing the steps j) and k) or when accordingly the monitor is incorporated by the RMM.

Soring the calculated monitoring values in the receiver database provides an efficient way of storing the results of monitoring the QoS without any additional storages or databases.

According to a refinement of the present invention in step d) the sent sender timestamps (TS_{S,i}) and the corresponding packet identifiers (IDᵢ) are arranged in sender batches of at least two sender timestamps (TS_{S,i}) and corresponding packet identifiers (IDᵢ) and stored as sender batches in the sender database. In step i) the sent receiver timestamps (TS_{R,i}) and the corresponding packet identifiers (IDᵢ) are arranged in receiver batches of at least two receiver timestamps (TS_{S,i}) and corresponding packet identifiers (IDᵢ) and stored as receiver batches in the receiver database.

According to a further refinement of the present invention the SMM is configured for arranging the sent sender timestamps (TS_{S,i}) and the corresponding packet identifiers (IDᵢ) in sender batches of at least two sender timestamps (TS_{S,i}) and corresponding packet identifiers (IDᵢ) and for storing the sent sender timestamps (TS_{S,i}) and the corresponding packet identifiers (IDᵢ) as sender batch in the sender database, and wherein the RMM is configured for arranging the sent receiver timestamps (TS_{R,i}) and the corresponding packet identifiers (IDᵢ) in receiver batches of at least two receiver timestamps (TS_{S,i}) and corresponding packet identifiers (IDᵢ) and for storing the sent receiver timestamps (TS_{R,i}) and the corresponding packet identifiers (IDᵢ) as receiver batch in the receiver database.

For the calculation of reliable and accurate monitoring values as well as average monitoring values more than one pair of corresponding timestamps (TS_{S,i}, TS_{R,i}) is needed. Furthermore, communicating packets comprising the respective batches of timestamps (TS_{S,i}, TS_{R,i}) and corresponding packet identifiers (IDᵢ) without any or only with very little empty or dummy data is more efficient and reduces traffic. Thus, the sender timestamps (TS_{S,i}) together with the corresponding packet identifiers (IDᵢ) and additionally or alternatively the receiver timestamps (TS_{R,i}) together with the respective packet identifiers (IDᵢ) are stacked in sender batches and receiver batches, respectively.

Consequently, storing the timestamps (TS_{S,i}, TS_{R,i}) and corresponding packet identifiers (IDᵢ) in batches provides a more efficient way of monitoring the QoS.

According to a refinement of the present invention the network is a Software Defined Network (SDN).

According to a further refinement of the present invention the network is a SDN and the network controller is a SDN controller.

SDN is an approach for building computer network hardware and software separating and abstracting two essential components of such hardware, the Control Plane and the Data Plane. SDN allows for simpler administration of networks by abstracting lower functional levels into virtual services. Thus, the hardware need not be manually configured. SDN provides network administrators with a programmable, central control of the network without having to manually access the respective physical network components (hardware). SDN decouples the system deciding where to the data is sent (Control Plane) from the subjacent system forwarding the data to the selected destination (Data Plane).

Thus, SDN provides for a simple and efficient platform for network communication between the sender and receiver with a certain intent having a certain minimal QoS level.

According to a refinement of the present invention the SMM and/or the RMM and/or the sender database and/or the receiver database are comprised by the network controller and/or the sender and/or the receiver.

Using the controller or the sender or the receiver for monitoring the QoS by means of the SMM, RMM, sender database and receiver database provides for a simple and efficient implementation of the monitoring task. Especially, when the SMM, RMM, sender database and receiver database are comprised by the network (SDN) controller, the system can be efficiently controlled and the sender and receiver need not be configured for application end-point aware monitoring. Instead any arbitrary sender and/or receiver can be part of the network without having to be adapted.

According to a third aspect of the present invention a method of monitoring and controlling Quality of Service (QoS) in a network includes the method according to the first aspect of the present invention and comprises the steps:
m) Determining based on the calculated monitoring values whether the QoS of a network connection between the sender and the receiver is sufficient for an intent of the network communication of the sender and the receiver.
n) Providing network resources to the network connection between the sender and the receiver depending on the intent and the current QoS of the network connection.

According to a fourth aspect of the present invention a system for monitoring and controlling QoS in a network includes the system according to the second aspect of the present invention and comprises a QoS module. The QoS module is configured for determining based on the calculated monitoring values whether the QoS of a network connection between the sender and the receiver is sufficient for an intent of the network communication of the sender and the receiver and for providing network resources to the network connection between the sender and the receiver depending on the intent and the current QoS of the network connection.

With the monitoring values calculated from the provided sender timestamps (TS_{S,i}) and receiver timestamps (TS_{R,i}) (e.g. via mathematical equations of IETF RFC 3550) the QoS of the network connection between the sender and the receiver can be monitored. E.g. the latency of the network connection can be monitored. Thereby, it is determined if the current QoS of the network connection is sufficient to serve the intent of the network communication of the sender (predefined or defined by the sender itself).

The minimum level of QoS required by the (predefined or self-defined) intent of the network connection of the sender is used as a threshold for providing additional resources to the network connection between the sender and the receiver. If the current QoS monitored by means of the calculated monitoring values drops under the minimum level of QoS (e.g. the latency becomes too high) then additional resources are provided to the network connection in order to maintain a sufficient QoS level for the intent.

Especially in case the intents in a network (SDN) are defined by the senders themselves, the third and fourth aspect of the present invention enable a closed-loop control of QoS for intents of network connections of senders in the network. This ensures a dynamic and reliable network control for applications with strict QoS requirements like motion control of robots of a production site via an industrial network.

According to a refinement of the present invention the QoS module is comprised by the RMM.

Especially, when the monitoring and control of QoS by calculating monitoring values and providing resources based on these values is implemented in the same entity, namely the RMM, a very efficient closed-loop control of the QoS of the network communication between the sender and the receiver is realized with no need for additional entities in the network. Thus very little additional traffic generated and very little additional capacity is needed.

The present invention and its technical field are subsequently explained in further detail by an exemplary embodiment shown in the drawing. The exemplary embodiment only conduces better understanding of the present invention and in no case is to be construed as limiting for the scope of the present invention. Particularly, it is possible to extract aspects of the subject-matter described in the figure and to combine it with other components and findings of the present description or figure, if not explicitly described differently. Equal reference signs refer to the same objects, such that explanations from other figures may be supplementally used.
- Fig. 1: schematically shows an architecture of an Software Defined Network.
- Fig. 2: schematically shows an embodiment according to the second and fourth aspect of the present invention.
- Fig. 3: schematically shows an alternative embodiment according to the second and fourth aspect of the present invention.
- Fig. 4: schematically shows a sender side of an embodiment of the second and fourth aspect of the present invention.
- Fig. 5: schematically shows a receiver side of an embodiment of the second and fourth aspect of the present invention.
- Fig. 6: schematically shows a first part of a flow chart of an embodiment according to the first and third aspect of the present invention.
- Fig. 7: schematically shows a second part of a flow chart of an embodiment according to the first and third aspect of the present invention.

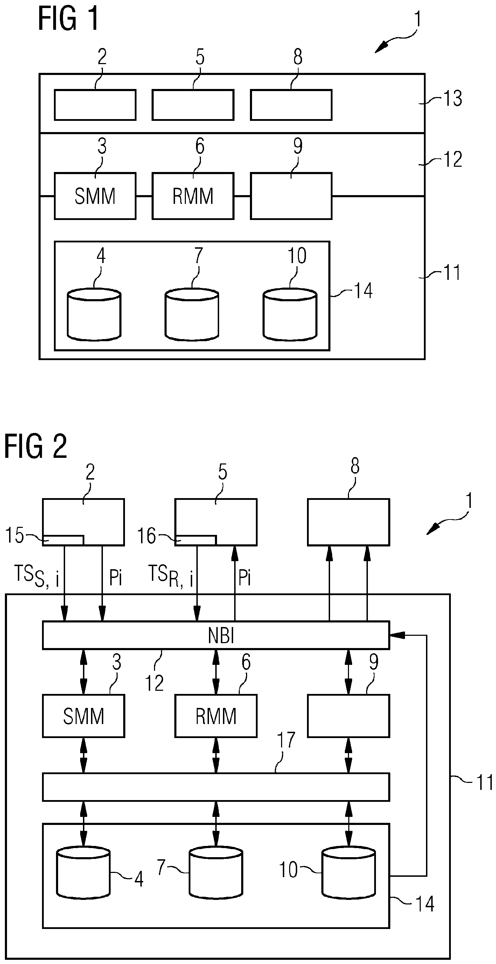

In Fig. 1 an architecture of an Software Defined Network (SDN) 1 is schematically depicted. The SDN comprises a sender 2, a receiver 5 and a monitor 8 as applications 13. The applications 13 are connected to a North Bound Interface (NBI) 12 of the SDN 1. The NBI 12 connects the applications 13 to a SDN controller 11. The SDN controller 11 comprises a Sender Monitor Manager (SMM) 3, a Receiver Monitor Manager (RMM) 6 and an intent manager 9. Further, the controller comprises a sender database 4, a receiver database 7 and an intent database 10, which are part of a storage 14 of the SDN controller 11.

The sender 2 can send packets (Pᵢ) via the NBI 12 over the SDN 1 to the receiver 5. This network connection from the sender 2 via the SDN 1 to the receiver 5 is controlled by the SDN controller 11 providing resources according to an intent of the sender or the network connection of the sender, respectively. The intent of the sender 2 is managed by the intent manager 9 and stored in the intent database 10. The sender 2 can also send data to the SMM 3 via the NBI 12, which SMM 3 can store this data in the sender database 4. The receiver 5 can send data to the RMM 6 via the NBI 12, which RMM 6 can store this data in the receiver database 7. The monitor 8 can fetch data from the sender database 4 and the receiver database 7 as well as from the intent database 10 via the intent manager 9 through the NBI 12.

In Fig. 2 an embodiment according to the second and fourth aspect of the present invention is schematically depicted. Here, the SDN 1 of Fig. 1 is shown in a different way and with additional entities. The sender 2 comprises a first timestamp generator 15 and the receiver comprises a second timestamp generator 16.
When the sender 2 sends a data packet (Pᵢ) through the NBI 12 via the SDN 1 to the receiver 5, then the first timestamp generator 15 generates a sender timestamp (TS_{S,i}). The sender timestamp (TS_{S,i}) together with an (unique) packet identifier (IDᵢ) of the sent data packet (Pᵢ) is sent through the NBI 12 to the SMM 3. The SMM 3 can stack a multitude of such sender timestamps (TS_{S,i}) with their respective packet identifier (IDᵢ) into sender batches and forward the batches (or alternatively single sender timestamps (TS_{S,i}) with their respective packet identifier (IDᵢ)) to the sender database 4 through a manager interface 17 within the SDN controller 11.

When the receiver 5 receives a data packet (Pᵢ) through the NBI 12 from the SDN 1, then the second timestamp generator 16 generates a receiver timestamp (TS_{R,i}). The receiver timestamp (TS_{R,i}) together with the (unique) packet identifier (IDᵢ) of the received data packet (Pᵢ) is sent through the NBI 12 to the RMM 6. The RMM 6 can stack a multitude of such receiver timestamps (TS_{R,i}) with their respective packet identifier (IDᵢ) into receiver batches and forward the batches (or alternatively single receiver timestamps (TS_{R,i}) with their respective packet identifier (IDᵢ)) to the receiver database 7 through the manager interface 17, which can be modeled as a NBI.

The intent manager 9 can receive a predefined intent for the network communication of the sender 2 with the receiver 5. The Sender 2 can also define the intent itself and send the intent via the NBI 12 to the intent manager 9 of the SDN controller 11. The intent manager stores the intent in the intent database through the manager interface 17.

The monitor 8 is depicted as separate application 13 here. However, the monitor 8 can also be incorporated by the sender 2 and/or by the receiver 5 and/or by the SDN controller 11. Preferably, the monitor 8 is incorporated in the RMM 6 of the SDN controller 11. The monitor 8 can fetch - pull and/or push - the sender timestamps (TS_{S,i}) from the sender database 4 and the receiver timestamps (TS_{R,i}) from the receiver database 7 as well as the intents from the intent database 10 through the monitor interface 17 and/or the NBI 12 depending on the location of the monitor 8. Based on the respective sender timestamp (TS_{S,i}) and the corresponding receiver timestamp (TS_{R,i}) of the each sent and received data packet (Pᵢ), where the respective timestamps can be selected by their corresponding packet identifier (IDᵢ), monitoring values can be calculated by the monitor 8. The monitoring values are metrics for the current Quality of service (QoS) of the network connection between the sender 2 and the receiver 5. The calculation of the monitoring values can be based upon the standard IETF RFC 3550.

Based on the calculated monitoring values and a QoS (e.g. maximal latency) that is required by the intent of the sender 2 the monitor 8 can, after having fetched the intent from the intent database 10 via the intent manager 9, determine if the current QoS of the network communication of the sender 2 with the receiver 5 is sufficient for the intent. The monitor can give feedback about the determined sufficiency of the QoS to the SDN controller 11, if the monitor 8 is not comprised by the SDN controller 11 or the RMM 6 of the SDN controller 11. If the QoS is not sufficient, the SDN controller 11 can provide, based on the determined sufficiency, additional resources for the network communication between sender 2 and receiver 5 in order to sufficiently serve the intent. If the QoS is better than required by the intent, the SDN controller can limit the resources of the network communication between sender 2 and the receiver 5 and assign the freed resources to another network communication if needed.

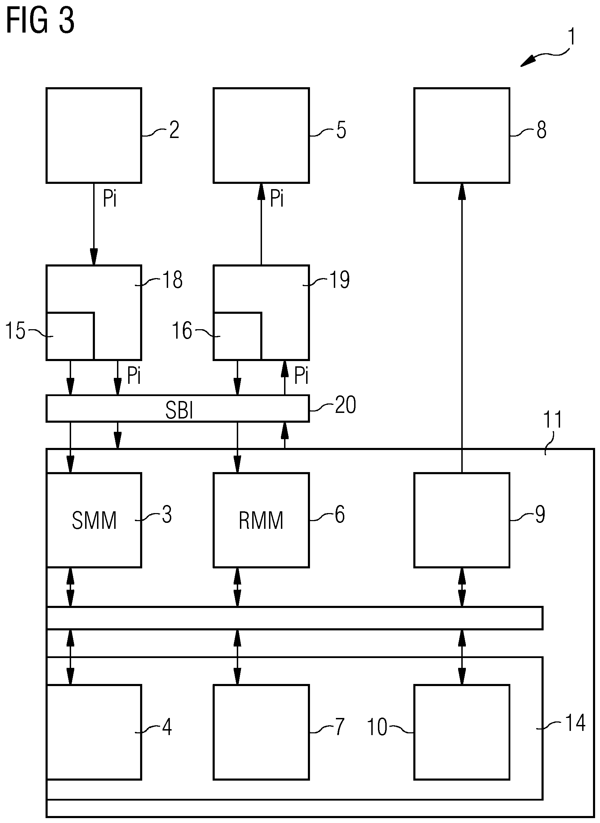

In Fig. 3 an alternative embodiment according to the second and fourth aspect of the present invention is schematically depicted. The SDN 1 is here shown in a different configuration compared to the SDN 1 of Fig. 2. In the following only differences to the embodiment according to Fig. 2 are described. The sender 2 is connected to a sender switch 18. The sender switch 18 is connected to the SDN controller 11 and its SMM 3 via a South Bound Interface (SBI) 20. The receiver 5 is connected to a receiver switch 19. The receiver switch 19 is connected to the SDN controller 11 and its RMM 6 via the SBI 20. The monitor 8 can be connected to the SDN controller 11 and the intent manager 9, the RMM 6 and the SMM 3 via a further switch (not depicted) and the SBI 20 or via the NBI 12 (not depicted) depending on its location. Here, the sender switch 18 comprises the first timestamp generator 15 and the receiver switch 19 comprises the timestamp generator 16.

When the sender 2 sends a data packet (Pᵢ) via the sender switch 18 over the SBI 20 to the SDN 1 for forwarding to the receiver 5, then the first timestamp generator 15 in the sender switch 18 generates a sender timestamp (TS_{S,i}) and forwards this generated sender timestamp (TS_{S,i}) together with the packet identifier (IDᵢ) of the respective data packet (Pᵢ) to the SMM 3 via the SBI 20.

When the receiver 5 receives a data packet (Pᵢ) via the receiver switch 19 over the SBI 20 from the SDN 1, then the second timestamp generator 16 in the receiver switch 19 generates a receiver timestamp (TS_{R,i}) and forwards this generated receiver timestamp (TS_{R,i}) together with the packet identifier (IDᵢ) of the respective data packet (Pᵢ) to the RMM 6 via the SBI 20.

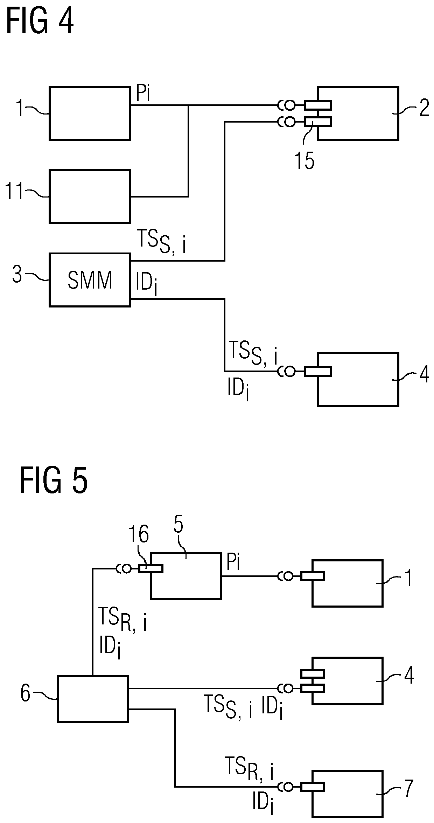

In Figs. 4 and 5 a sender side (Fig. 4) and a receiver side (Fig. 5) of an embodiment of the second and fourth aspect of the present invention according to Fig. 2 or Fig. 3 are schematically depicted.

The sender 2 can define an intent for a network communication between itself and the receiver 5 and forward the intent to the SDN controller 11. The intent can comprise a certain minimum level of QoS for the network communication. The SDN controller 11 can serve the intent by providing resources for the network communication between sender 2 and receiver 5.

At the time point the sender 2 sends a data packet (Pᵢ) to the SDN 1 (via the NBI 12 or the sender switch 18 and the SBI 20) the first timestamp generator 15 (comprised by the sender 2 or the sender switch 18) generates a sender timestamp (TS_{S,i}). The generated sender timestamp (TS_{S,i}) is forwarded (via the NBI 12 or the SBI 20) together with the packet identifier (IDᵢ) of the respective sent data packet (Pᵢ) to the SMM 3. The SMM 3 can store the sender timestamp (TS_{S,i}) with the respective packet identifier (IDᵢ) in the sender database 4. The SMM 3 can arrange at least two sender timestamps (TS_{S,i}) with their respective packet identifiers (IDᵢ) in a sender batch and store the sender batch in the sender database 4.

At the time point the receiver 5 receives a data packet (Pᵢ) from the SDN 1 (via the NBI 12 or the receiver switch 18 and the SBI 20) the second timestamp generator 16 (comprised by the receiver 5 or the receiver switch 19) generates a receiver timestamp (TS_{R,i}). The generated receiver timestamp (TS_{R,i}) is forwarded (via the NBI 12 or the SBI 20) together with the packet identifier (IDᵢ) of the respective received data packet (Pᵢ) to the RMM 6. The RMM 6 can store the receiver timestamp (TS_{R,i}) with the respective packet identifier (IDᵢ) in the receiver database 7. The RMM 6 can arrange at least two receiver timestamps (TS_{R,i}) with their respective packet identifiers (IDᵢ) in a receiver batch and store the receiver batch in the receiver database 7.

The RMM 6 can comprise the monitor 8 and fetch (pull or push) the sender timestamps (TS_{S,i}) and receiver timestamps (TS_{R,i}) based on the packet identifiers (IDᵢ) of sent and received packets (Pᵢ) from the sender database 4 and the receiver database 7, respectively. The sender timestamps (TS_{S,i}) and receiver timestamps (TS_{R,i}) can be fetched in sender batches and receiver batches, respectively.

The RMM 6 with the monitor 8 can calculate monitoring values based on the fetched timestamps (TS_{S,i}, TS_{R,i}) for evaluating the current QoS of the network communication between the sender 2 and the receiver 5. Further, the RMM 6 with the monitor 8 can determine, if the current QoS is sufficient for the desired intent having fetched the stored intent from the intent database 10 via the intent monitor 9. Based on the determined sufficiency the SDN controller 11 can provide additional resources to the network connection between the sender 2 and the receiver 5 if the QoS is not sufficient for the intent. The SDN controller 11 can also restrict resources for or take resources from the network communication between sender 2 and receiver 5, if the current QoS is better than needed by the intent.

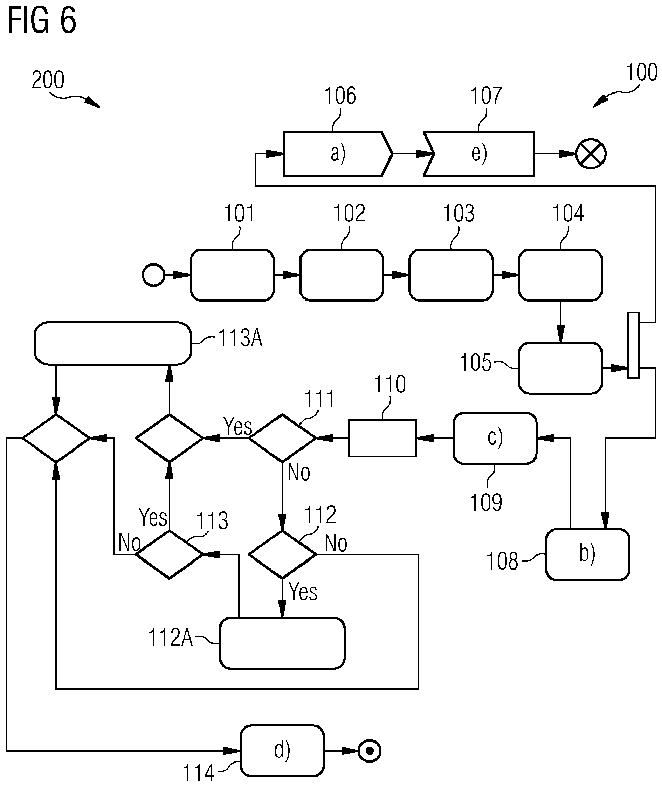

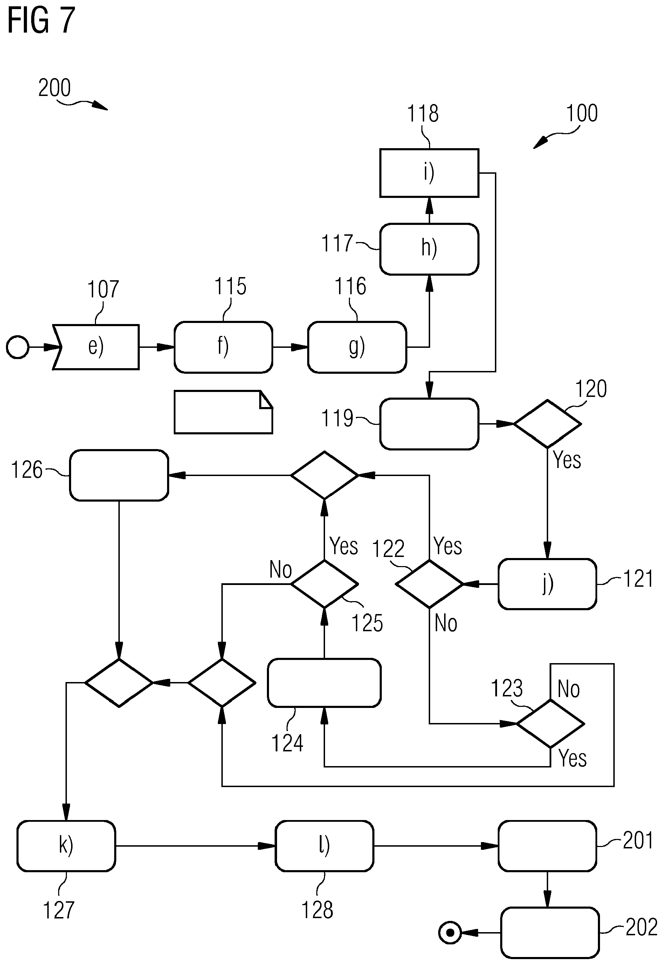

In Figs. 6 and 7 a first part (Fig. 6) and a second part (Fig. 7) of a flow chart of an embodiment according to the first and third aspect of the present invention is schematically depicted. A method 100 of application end-point aware monitoring is schematically shown comprising several optional and mandatory steps.

In an optional step of defining 101 an intent for a network communication of the sender 2 with the receiver 5 via the SDN 1 can be defined. The intent can be defined by the sender 2 itself or by the SDN controller 11 or an external entity.

In an optional step of forwarding 102 the intent can be forwarded to the SDN controller 11 of the SDN 1. For example, the sender 2 may forward the defined intent to the SDN controller 11.

In an optional step of serving 103 the intent can be served by the SDN controller 11. The SDN controller provides resources to the network connection between the sender 2 and the receiver 5 according to a minimum level of QoS defined by the intent.

In an optional step of informing 104 the SDN controller 11 can inform the sender 2 about a completion status of the intent request, when the network communication between sender 2 and receiver 5 is completely established.

In an optional step of generating 105 the sender 2 can generate packets (Pᵢ). The packets (Pᵢ) contain data for the receiver 5.

In a step of sending 106 at least one of the generated data packets (Pᵢ) is sent from the sender 2 to the SDN 1 for forwarding to the receiver 5. The sender 2 can use the NBI 12 or the sender switch 18 and the SBI 20 for sending the at least one data packet (Pᵢ).

In a step of forwarding 107 the at least one data packet (Pᵢ) is forwarded to the receiver 5. The at least one data packet (Pᵢ) can be forwarded via the NBI 12 or by the sender switch 18, the SBI 20 and the receiver switch 19.

In a step of generating 108 a sender timestamp (TS_{S,i}) is generated for each data packet (Pᵢ) at the sender 2 upon sending of the respective data packet (Pᵢ). The sender timestamp (TS_{S,i}) is generated in the sender 2 or in the vicinity of the sender 2 e.g. by the sender switch 18.

In a step of sending 109 the generated sender timestamps (TS_{S,i}) each together with a packet identifier (IDᵢ) of the respective data packet (Pᵢ) are sent to the SMM 3.

In an optional step of fetching 110 a list of packet identifiers (IDᵢ) of sent data packets (Pᵢ) can be fetched from the sender database 4. Here, the RMM 6 can fetch the list of packet identifiers (IDᵢ) of sent data packets (Pᵢ) for further checks.

In an optional step of checking 111 it can be checked if the fetching 110 has failed.

In an optional step of checking 112 it can be checked if the number of sent data packets (Pᵢ) is greater than a value of a predetermined history size variable.

In an optional step of deleting 112A the sender database 4 can be deleted by the SMM 3 if the step of checking 112 is positive.

In an optional step of checking 113 it can be checked if the step of deleting 112A was successful.

In an optional step of setting 113A a value of a variable indicating the number of packets sent can be set to 0, if the step of checking 113 or the step of checking 111 is positive. In a step of storing 114 the sender timestamps (TS_{S,i}) together with the respective packet identifiers (IDᵢ) are stored in the sender database 4 by the SMM 3. The step of storing 114 follows after the step of sending 109 or after the optional step of checking 112 or the optional step of checking 113 have been negative or after the optional step of setting 113A.

In a step of receiving 115 the forwarded at least one data packet (Pᵢ) is received from the SDN 1 by the receiver 5 after the step of forwarding 107. The at least one data packet (Pᵢ) can be received through the NBI 12 or through the SBI 20 and the receiver switch 19.

In a step of generating 116 a receiver timestamp (TS_{R,i}) is generated for each data packet (Pᵢ) at the receiver 5 upon receiving of the respective data packet (Pᵢ). The receiver timestamp (TS_{R,i}) is generated in the receiver 2 or in the vicinity of the receiver 5 e.g. by the receiver switch 19.

In a step of sending 117 the generated receiver timestamps (TS_{R,i}) each together with the packet identifier (IDᵢ) of the respective data packet (Pᵢ) are sent to the RMM 6.

In a step of storing 118 the receiver timestamps (TS_{R,i}) together with the respective packet identifiers (IDᵢ) are stored in the receiver database 7 by the RMM 6.

In an optional step of fetching 119 a list of packet identifiers (IDᵢ) of received data packets (Pᵢ) can be fetched from the receiver database 7. Here, the RMM 6 can fetch the list of packet identifiers (IDᵢ) of received data packets (Pᵢ) for further checks.

In an optional step of comparing 120 the list of packet identifiers (IDᵢ) of received data packets (Pᵢ) can be compared with the list of packet identifiers (IDᵢ) of sent data packets (Pᵢ). Based on the comparison only timestamps of sent and received packets (Pᵢ) can be considered in the following steps.

In a step of fetching 121 for each received data packet (Pᵢ) via the packet identifier (IDᵢ) the respective sender timestamp (TS_{S,i}) is fetched from the sender database 4 and the respective receiver timestamp (TS_{R,i}) is fetched from the receiver database 7. Here, the RMM 6 can fetch the timestamps (TS_{S,i}, TS_{R,i}) from the sender database 4 and the receiver database 7, respectively.

In an optional step of checking 122 it can be checked if the step of fetching 121 failed.

In an optional step of checking 123 it can be checked if the number of sent packets (Pᵢ) is smaller than the number of received packets (Pᵢ).

In an optional step of deleting 124 the receiver database 7 can be deleted by the RMM 6 if the step of checking 123 is positive.

In an optional step of checking 125 it can be checked if the step of deleting 124 was successful.

In an optional step of setting 126 a value of a variable indicating the number of packets received can be set to 0, if the step of checking 125 or the step of checking 122 is positive.

In a step of calculating 127 monitoring values are calculated based on the fetched sender timestamps (TS_{S,i}) and corresponding receiver timestamps (TS_{R,i}). The step of calculating 127 follows after the step of fetching 121 or after the optional step of checking 123 or the optional step of checking 125 have been negative or after the optional step of setting 126. Here, the RMM 6 can calculate the monitoring values.

In an optional step of storing 128 the calculated monitoring values are stored in the receiver database 7. Here, the RMM 6 can store the calculated monitoring values in the receiver database 7.

A method 200 of monitoring and controlling Quality of Service (QoS) in the SDN 1 includes the method 100 as described above and comprises two additional steps.

In a step of determining 201 based on the calculated monitoring values it is determined whether the QoS of the network connection between the sender 2 and the receiver 5 is sufficient for the intent of the network communication of the sender 2 and the receiver 5. Here, the RMM 6 can determine the sufficiency of the QoS of the network connection.

In a step of providing 202 network resources are provided to the network connection between the sender 2 and the receiver 5 depending on the intent and the current QoS of the network connection. Here, the SDN controller 11 comprising the RMM 6 can provide network resources to the network connection.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In the foregoing detailed description, various features are grouped together in one or more examples for the purpose of streamlining the disclosure. It is understood that the above description is intended to be illustrative, and not restrictive. It is intended to cover all alternatives, modifications and equivalents as may be included within the scope of the invention. Many other examples will be apparent to one skilled in the art upon reviewing the above specification.

Specific nomenclature used in the foregoing specification is used to provide a thorough understanding of the invention. However, it will be apparent to one skilled in the art in light of the specification provided herein that the specific details are not required in order to practice the invention. Thus, the foregoing descriptions of specific embodiments of the present invention are presented for purposes of illustration and description. They are not intended to be exhaustive or to limit the invention to the precise forms disclosed; obviously many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated. Throughout the specification, the terms "including" and "in which" are used as the plain-English equivalents of the respective terms "comprising" and "wherein," respectively. Moreover, the terms "first," "second," and "third," etc., are used merely as labels, and are not intended to impose numerical requirements on or to establish a certain ranking of importance of their objects. In the context of the present description and claims the conjunction "or" is to be understood as including ("and/or") and not exclusive ("either ... or") .

## Claims

1. Method of application end-point aware monitoring, comprising the steps:
a) sending (106) at least one data packet (Pᵢ) from a sender (2) to a network (1) for forwarding to a receiver (5);
b) generating (108) a sender timestamp (TS_{S,i}) for each data packet (Pᵢ) at the sender (2) upon sending of the respective data packet (Pᵢ);
c) sending (109) the generated sender timestamps (TS_{S,i}) each together with a packet identifier (IDᵢ) of the respective data packet (Pᵢ) to a Sender-Monitor-Manager, SMM, (3);
d) storing (114) the sender timestamps (TS_{S,i}) together with the respective packet identifiers (IDᵢ) in a sender database (4) by the SMM (3);
e) forwarding (107) the at least one data packet (Pᵢ) to the receiver (5);
f) receiving (115) the forwarded at least one data packet (Pᵢ) from the network (1) by the receiver (5);
g) generating (116) a receiver timestamp (TS_{R,i}) for each data packet (Pᵢ) at the receiver (5) upon receiving of the respective data packet (Pᵢ);
h) sending (117) the generated receiver timestamps (TS_{R,i}) each together with the packet identifier (IDᵢ) of the respective data packet (Pᵢ) to a Receiver-Monitor-Manager, RMM, (6);
i) storing (118) the receiver timestamps (TS_{R,i}) together with the respective packet identifiers (IDᵢ) in a receiver database (7) by the RMM (6);
j) fetching (121) for each received data packet (Pᵢ) via the packet identifier (IDᵢ) the respective sender timestamp (TS_{S,i}) from the sender database (4) and the respective receiver timestamp (TS_{R,i}) from the receiver database (7);
k) calculating (127) monitoring values based on the fetched sender timestamps (TS_{S,i}) and corresponding receiver timestamps (TS_{R,i}).

2. Method (100) according to claim 1, wherein the sender timestamps (TS_{S,i}) are generated by the sender (2) and/or wherein the receiver timestamps (TS_{R,i}) are generated by the receiver (5).

3. Method (100) according to claim 1 or 2, wherein the sender timestamps (TS_{S,i}) are generated by a sender switch (18) located next to the sender (2) and/or wherein the receiver timestamps (TS_{R,i}) are generated by a receiver switch (19) located next to the receiver (5).

4. Method (100) according to any of claims 1 to 3, further comprising the initial steps:
- defining (101) an intent for a network communication of the sender (2) with the receiver (5) via the network (1);
- forwarding (102) the intent to a network controller (11) of the network (1);
- serving (103) the intent by the network controller (11) .

5. Method (100) according to any of claims 1 to 4, wherein the network (1) is a Software Defined Network, SDN.

6. Method (200) of monitoring and controlling Quality of Service, QoS, in a network (1), including the method (100) according to any of claims 1 to 5, comprising the steps:
m) determining (201) based on the calculated monitoring values whether the QoS of a network connection between the sender (2) and the receiver (5) is sufficient for an intent of the network communication of the sender (2) and the receiver (5); and
n) providing (202) network resources to the network connection between the sender (2) and the receiver (5) depending on the intent and the current QoS of the network connection.

7. System for application end-point aware monitoring, comprising:
a network (1) configured for forwarding data packets (Pᵢ);
a sender (2) communicatively connected with the network (1) and configured for sending data packets (Pᵢ) to the network (1);
a first timestamp generator (15) at the sender (2) configured for generating a sender timestamp (TS_{S,i}) for each data packet (Pᵢ) upon sending of the respective data packet (Pᵢ);
a Sender-Monitor-Manager, SMM, (3), wherein the first timestamp generator () is further configured for sending the generated sender timestamps (TS_{S,i}) each together with a packet identifier (IDᵢ) of the respective data packet (Pᵢ) to the SMM (3) ;
a sender database (4), wherein the SMM (3) is configured for storing the sender timestamps (TS_{S,i}) together with the respective packet identifiers (IDᵢ) in the sender database (4) ;
a receiver (5) communicatively connected to the network (1) and configured for receiving data packets (Pᵢ) from the network (1);
a second timestamp generator (16) at the receiver (5) configured for generating a receiver timestamp (TS_{R,i}) for each data packet (Pᵢ) upon receiving of the respective data packet (Pᵢ);
a Receiver-Monitor-Manager, RMM, (6), wherein the second timestamp generator (16) is further configured for sending the receiver timestamps (TS_{R,i}) each together with the packet identifier (IDᵢ) of the respective data packet (Pᵢ) to the RMM (5) ;
a receiver database (7), wherein the RMM (6) is configured for storing the receiver timestamps (TS_{R,i}) together with the respective packet identifiers (IDᵢ) in the receiver database (7); and
a monitor (8) configured for fetching for each received data packet (Pᵢ) via the packet identifier (IDᵢ) the respective sender timestamp (TS_{S,i}) from the sender database (4) and the respective receiver timestamp (TS_{R,i}) from the receiver database (7) and for calculating monitoring values based on the fetched sender timestamps (TS_{S,i}) and
corresponding receiver timestamps (TS_{R,i}).

8. System according to claim 7, wherein the first timestamp generator (15) is incorporated by the sender (3) and/or wherein the second timestamp generator (16) is incorporated by the receiver (5).

9. System according to claim 7 or 8, further comprising a sender switch (18) located next to the sender (2), wherein the first timestamp generator (15) is incorporated by the sender switch (18); and/or
a receiver switch (19) located next to the receiver (5), wherein the second timestamp generator (16) is incorporated by the receiver switch (19).

10. System according to any of claims 7 to 9, further comprising:
an intent module configured for defining an intent for a network communication of the sender (2) with the receiver (5) via the network (1); and
a network controller (11) for the network (1), wherein the intent module is further configured for forwarding the intent to the network controller (11) and wherein the network controller (11) is configured for serving the intent.

11. System according to any of claims 7 to 10, wherein the network (1) is a Software Defined Network, SDN, and the network controller (11) is a SDN controller.

12. System according to any of claims 7 to 11, wherein the SMM (3) and/or the RMM (6) and/or the sender database (4) and/or the receiver database (7) are comprised by the network controller (11) and/or the sender (2) and/or the receiver (5).

13. System for monitoring and controlling Quality of Service, QoS, in a network (1), including the system according to any of claims 7 to 12, comprising:
a QoS module configured for determining based on the calculated monitoring values whether the QoS of a network connection between the sender (2) and the receiver (5) is sufficient for an intent of the network communication of the sender (2) and the receiver (5) and for providing network resources to the network connection between the sender (2) and the receiver (5) depending on the intent and the current QoS of the network connection.

14. System according to claim 13, wherein the QoS module is comprised by the RMM (6).
